# EUROPÄISCHE PATENTSCHRIFT

(11) **EP 2 422 179 B1**
(45) Veröffentlichungstag und Bekanntmachung des Hinweises auf die Patenterteilung: **23.07.2014**
(21) Anmeldenummer: 10715700.0
(22) Anmeldetag: 19.04.2010
(51) Int. Cl.: G01N 1/20

(54) **PROBENAHMESYSTEM**
SAMPLING SYSTEM
SYSTÈME DE PRÉLÈVEMENT D'ÉCHANTILLONS

(30) Priorität: 22.04.2009 DE 102009018314
(43) Veröffentlichungstag der Anmeldung: 29.02.2012
(73) Patentinhaber: Wisser, Joerg, 78112 St. Georgen (DE)
(72) Erfinder: Wisser, Joerg, 78112 St. Georgen (DE)
(74) Vertreter: Modrow, Stephanie
(86) Internationale Anmeldenummer: PCT/EP2010/002376
(87) Internationale Veröffentlichungsnummer: WO 2010/121765

(56) Entgegenhaltungen:
- EP-A1- 0 806 648
- DE-A1- 4 301 174
- DE-U1- 9 212 527

## Beschreibung

Die Erfindung betrifft ein Probenahmesystem gemäß dem Oberbegriff des Patentanspruchs 1.

Bekannt sind Probenahmesysteme, welche ein erstes Anschlussstück zum Anschluss an ein fluiddurchströmtes Rohr und ein drittes Anschlussstück aufweisen, über welches die Probenahme erfolgen kann, und welche weiterhin ein Küken aufweisen, welches einen Grundkörper mit einer Längsache, um welche das Küken zwischen einer ersten und einer zweiten Endstellung verschwenkbar ist, und einer Probenahmeausnehmung aufweist, wobei in der ersten Endstellung die Probenahmeausnehmung über das erste Anschlussstück mit dem fluiddurchströmten Rohr und in der zweiten Endstellung die Probenahmeausnehmung mit dem dritten Anschlussstück verbindbar ist. Zur Probenahme ist an das dritte Anschlussstück ein erstes Ende einer Ablassnadel angeschlossen, welche mit einem zweiten Ende durch eine Membran eines Probenahmevolumens stechbar ist. Mit Hilfe derartiger Probenahmesysteme ist es möglich, insbesondere giftige und umweltschädliche Fluide zu entnehmen, da zur Entnahme kein Öffnen des fluiddurchströmten Rohrs vonnöten ist, sondern lediglich während des Betriebs die Probenahmeausnehmung in der ersten Endstellung mit dem Fluid gefüllt und ein definiertes Volumen des Fluids anschließend über das dritte Anschlussstück entnommen werden kann, wobei das Fluid durch die Entnahmenadel direkt in das Probenahmevolumen fließen kann, welches über die Membran verschlossen ist, so dass kein Außenkontakt des Fluids auftritt. Das Probenahmesystem ist somit umweltfreundlich und kontaminationsfrei. Insbesondere kann eine repräsentative Probe direkt aus der Produkt- oder Bypass-Leitung entnommen werden.

Das Fluid kann in der zweiten Endstellung aus der Probenahmeausnehmung in Probenahmevolumen in der Regel nur dann vollständig abfließen, wenn gleichzeitig Luft nachströmen kann. Dazu ist es bekannt, an einem zusätzlichen Anschlussstück des Probenahmesystems eine Entlüftungsleitung vorzusehen, die entweder mit der Umgebungsluft, wie in DE 4301174 A1, oder zur kontaminationsfreien Entnahme mit einer weiteren Nadel verbunden ist, welche gleichzeitig mit der Entnahmenadel durch die Membran in das Probenahmevolumen stechbar ist, wie in DE 921 2527 U. Bei Überführen der Küken in die zweite Endstellung wird dabei das Probenahmevolumen mit dem zusätzlichen Anschlussstück verbunden, so dass über das dritte Anschlussstück die Probe aus der Probenahmeausnehmung herausfließen kann, während über das zusätzliche Anschlussstück Luft oder ein anderes Gas nachströmen kann. Insbesondere für eine kontaminationsfreie Entnahme ist dieser Aufbau jedoch konstruktiv aufwändig, da ein zusätzliches Anschlussstück vorhanden sein muss und eine um das Probenahmesystem herumgeführte Entlüftungsleitung von dem zusätzlichen Anschlussstück zu dem Probenahmevolumen vorgesehen werden muss.

Die Aufgabe der Erfindung besteht daher darin, ein Probenahmesystem bereitzustellen, welches konstruktiv einfacher aufgebaut ist.

Die Aufgabe wird erfindungsgemäß gelöst durch ein Probenahmesystem mit den Merkmalen des Patentanspruchs 1.

Vorteilhafte Ausgestaltungen und Weiterbildungen der Erfindung sind in den Unteransprüchen angegeben.

Das erfindungsgemäße Probenahmesystem, welches ein erstes Anschlussstück zum Anschluss an ein fluiddurchströmtes Rohr und ein drittes Anschlussstück aufweist, und mit einem Küken, welches einen Grundkörper mit einer Längsachse, um welche das Küken zwischen einer ersten und einer zweiten Endstellung verschwenkbar ist, und einer Probenahmeausnehmung aufweist, wobei in der ersten Endstellung die Probenahmeausnehmung über das erste Anschlussstück mit dem fluiddurchströmten Rohr und in der zweiten Endstellung die Probenahmeausnehmung mit dem dritten Anschlussstück verbindbar ist, wobei das dritte Anschlussstück mit einem ersten Ende einer Entnahmenadel, welche mit einem zweiten Ende durch eine Membran eines Probenahmevolumens stechbar ist, verbunden ist, zeichnet sich dadurch aus, dass in der zweiten Endstellung die Probenahmeausnehmung über das dritte Anschlussstück mit einem ersten Ende einer Entlüftungsnadel verbunden ist. Erfindungsgemäß stehen somit sowohl die Entnahmenadel als auch die Entlüftungsnadel direkt mit dem dritten Anschlussstück in Verbindung, so dass kein zusätzliches Anschlussstück in dem Probenahmesystem und keine um das Probenahmesystem herumgeführte Entlüftungsleitung zur kontaminationsfreien Entnahme vonnöten sind.

Gemäß einer bevorzugten Ausführungsform der Erfindung liegen sowohl die Entnahmenadel als auch die Entlüftungsnadel mit ihrem jeweiligen ersten Ende in einem mit dem dritten Anschlussstück verbundenen Volumen.

Gemäß einer bevorzugten Ausführungsform ragt die Entlüftungsnadel weiter in das Volumen hinein als die Entnahmenadel, um sicherzustellen, dass nach Überführen des Kükens in die zweite Endstellung das aus der Probenahmeausnehmung herausfließende Fluid über die Entnahmenadel in das Probenahmevolumen abfließen kann und nicht die Entlüftungsnadel verschließt.

Vorzugsweise ist das Volumen über ein Rohr, insbesondere einen gekrümmten Rohrabschnitt, mit dem dritten Anschlussstück verbunden, um einen variablen Einbau des Probenahmesystems in das fluidführende Rohr zu ermöglichen.

Vorzugsweise ist das Volumen durch ein Rohrstück gebildet, um einen definierten Raum vorzugeben.

Gemäß einer bevorzugten Ausführungsform der Erfindung ist das erste Ende der Entlüftungsnadel um einen Winkel, insbesondere um einen Winkel von etwa 90° bis 180°, abgebogen, um zu verhindern, dass das aus der Probenahmeausnehmung austretende Fluid in die Entlüftungsnadel fließt.

Gemäß einer bevorzugten Ausführungsform der Erfindung weist das Probenahmesystem ein zweites, dem ersten Anschlussstück insbesondere gegenüber liegendes Anschlussstück auf, wobei das dritte Anschlussstück um einen Winkel gegen die Verbindungsachse des ersten und des zweiten Anschlussstücks versetzt angeordnet ist. Auf diese Weise wird es möglich, das Probenahmesystem direkt in ein fluiddurchströmtes Rohr einzusetzen und auf diese Weise eine repräsentative Probe entnehmen zu können.

Vorzugsweise verläuft die Längsachse des Grundkörpers im in das Probenahmesystem eingesetzten Zustand im Wesentlichen senkrecht zur Verbindungsachse des ersten und des zweiten Anschlussstücks, um einen besonders einfachen konstruktiven Aufbau zu erhalten.

Gemäß einer besonders bevorzugten Ausführungsform der Erfindung ist in keiner der Endstellungen einschließlich sämtlicher Zwischenstellungen eine Verbindung des ersten Anschlussstücks mit dem dritten Anschlussstück oder eine Verbindung des zweiten Anschlussstücks mit dem dritten Anschlussstück gegeben, um auf diese Weise einerseits ein definiertes Probenvolumen entnehmen zu können und andererseits eine drucklose Probenahme zu ermöglichen.

Gemäß einer bevorzugten Ausführungsform der Erfindung ist die Probenahmeausnehmung als Durchgangsöffnung ausgebildet, wobei in der ersten Endstellung über die Durchgangsöffnung das erste Anschlussstück und das zweite Anschlussstück und in der zweiten Endstellung die Durchgangsöffnung mit dem dritten Anschlussstück verbindbar ist, um auf diese Weise eine Probenahme direkt aus dem Probestrom ermöglichen zu können.

Ein konstruktiv einfacher Aufbau ergibt sich, wenn vorzugsweise die Durchgangsöffnung im Wesentlichen quer zur Längsachse des Kükens verläuft.

Ein Ausführungsbeispiel der Erfindung wird anhand der nachfolgenden Figuren ausführlich erläutert. Es zeigt:
- Figur 1: eine perspektivische Ansicht eines Ausführungsbeispiels eines Probenahmesystems,
- Figur 2: einen Schnitt entlang der Linie A-A aus Figur 1, und
- Figur 3: einen Schnitt entlang der Linie B-B aus Figur 1.

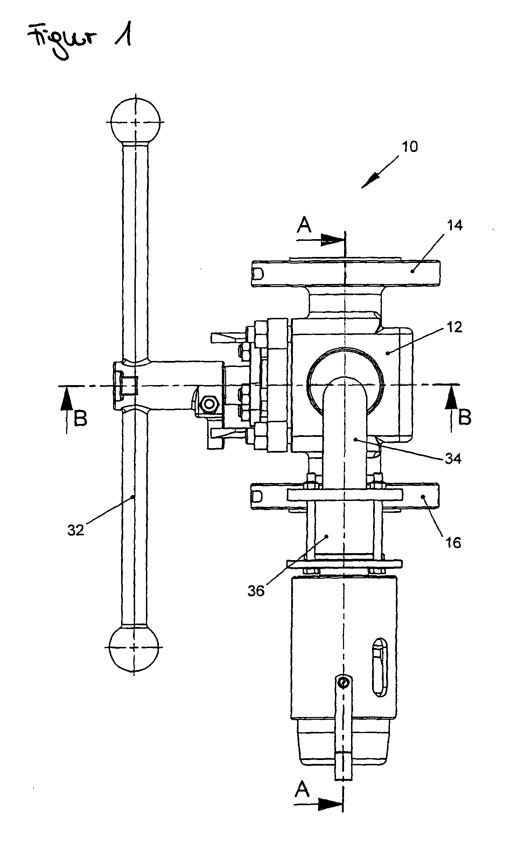

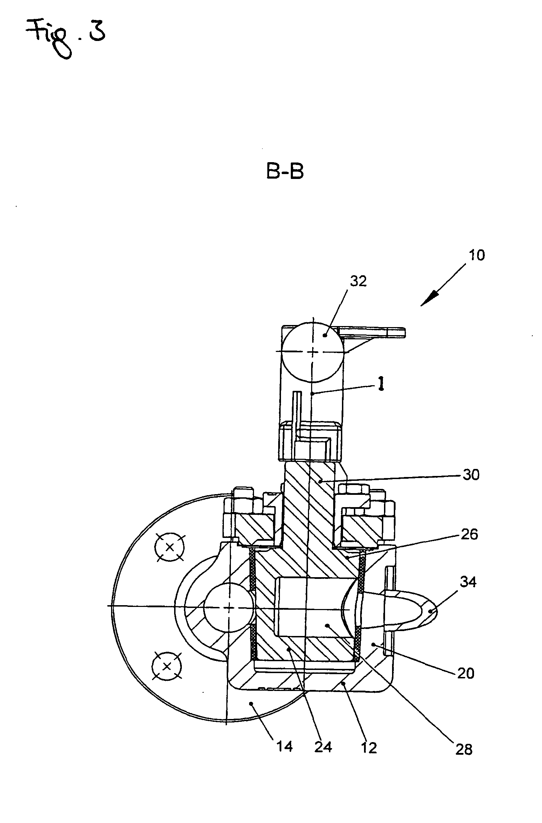

Die Figuren 1 bis 3 zeigen verschiedene Ansichten eines Probenahmesystems 10, wobei zur besseren Übersicht nicht sämtliche Bezugsziffern in sämtlichen Figuren angegeben sind.

Das Probenahmesystem 10 weist ein Gehäuse 12 auf, welches im Wesentlichen zylindrisch mit einem ersten Anschlussstück 14 und einem zweiten Anschlussstück 16 ausgebildet ist, welches über ein im Wesentlichen zylindrisches Verbindungsvolumen 18, welches eine Verbindungsachse v aufweist, verbunden sind. An das erste Anschlussstück 14 und das zweite Anschlussstück 16 können jeweils fluiddurchströmte Rohre angeschlossen werden, so dass das Gehäuse 12 Teil eines fluiddurchströmten Rohrs wird. Das Probenahmesystem 10 wird insbesondere in flüssigkeitsdurchströmten Rohren zur Probenahme verwendet.

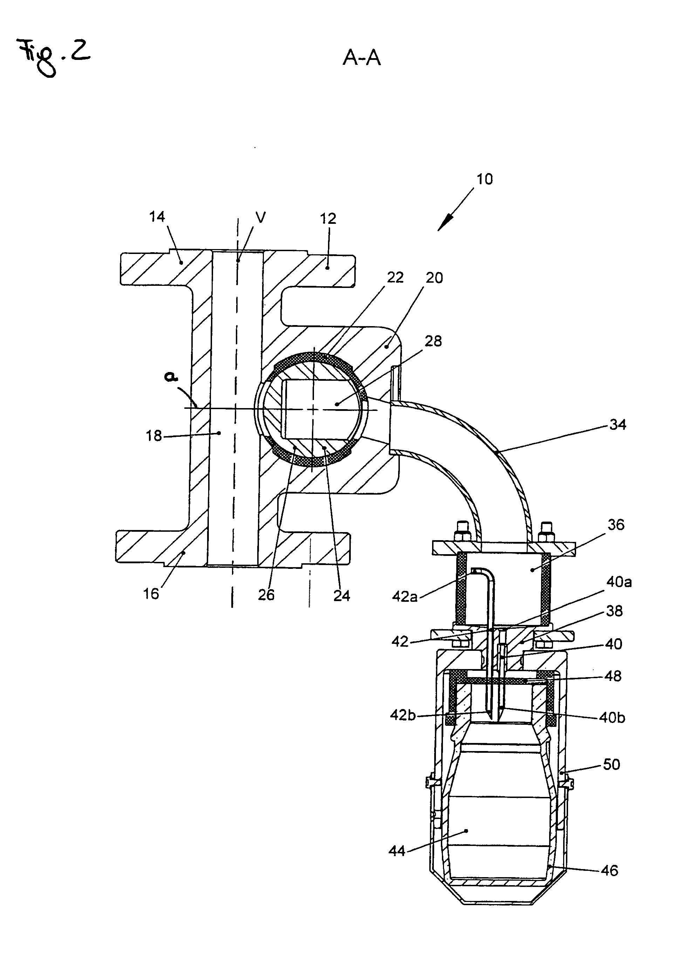

Quer zur Verbindungsachse v verläuft innerhalb des Gehäuses 12 ein Verbindungsvolumen 22 mit einer Längsachse a, welches das Verbindungsvolumen 18 mit einem dritten Anschlussstück 20 verbindet. Das Verbindungsvolumen 22 weist insbesondere einen Hohlraum auf, in welchem ein Küken 24 mit einem Grundkörper 26 schwenkbar gelagert einsetzbar ist. Der Grundkörper 26 weist dabei eine Längsachse 1 auf, die insbesondere quer zur Verbindungsachse v und quer zur Längsachse a verläuft und um welche der Grundkörper 26 zwischen einer ersten Endstellung und einer zweiten Endstellung schwenkbar gelagert ist. Der Grundkörper 26 weist eine im Wesentlichen konische Form auf. In dem Grundkörper 26 ist eine Probenahmeausnehmung 28 angeordnet, wobei diese in einer Seitenfläche des Grundkörpers 26 endet und sich quer zur Längsachse 1 des Grundkörpers 26 in den Innenraum des Grundkörpers 26 erstreckt. In der zweiten Endstellung des Kükens 24 ist die Probenahmeausnehmung 28 mit dem dritten Anschlussstück 20 verbunden (vgl. insbesondere Figur 2). In der ersten Endstellung ist der Grundkörper 26 um etwa 180° um seine Längsachse 1 verdreht, so dass die Probenahmeausnehmung 28 mit dem Verbindungsvolumen 18 und somit mit dem ersten Anschlussstück 14 und dem zweiten Anschlussstück 16 in Verbindung steht. Um den Grundkörper 26 auf einfache Art und Weise drehen zu können, ist in Richtung der Längsachse 1 zentrisch an dem Grundkörper 26 ein Schaft 30 angeordnet, an welchem quer zur Längsachse 1 ein Griff 32 angeordnet ist.

Zur Probenahme wird zunächst das Küken 24 in die erste Endstellung gebracht, so dass die Flüssigkeit, welche durch das Rohr strömt, auch die Probenahmeausnehmung 28 füllt. Um die Probe entnehmen zu können, wird das Küken 24 um 180° verschwenkt, so dass die Probenahmeausnehmung 28 mit dem dritten Anschlussstück 20 in Verbindung steht, über welche das definierte Probenvolumen entnommen werden kann. An das dritte Anschlussstück schließt sich zunächst ein Rohrabschnitt 34 an, welcher mit seinem anderen Ende mit einem Volumen 36 verbunden ist. Der Rohrabschnitt 34 ist insbesondere gekrümmt ausgebildet, um einen flexiblen Einbau zu ermöglichen.

Das Volumen 36 wird insbesondere durch ein zylindrisches Rohr gebildet, das mit seinem einen Ende über einen Flansch mit dem Rohrabschnitt 34 verbunden ist, während an dem anderen Ende ein Nadelhalter 38 angeordnet ist. In dem Nadelhalter 38 ist eine Entnahmenadel 40, welche ein erstes Ende 40a und ein zweites Ende 40b aufweist, derart angeordnet, dass das erste Ende 40a in dem Volumen 36 liegt, während das zweite Ende 40b außerhalb des Volumens 36 liegt. Über die Entnahmenadel 40 kann die aus der Probenahmeausnehmung 28 in das Volumen 36 geströmte Flüssigkeit aus dem Volumen 36 herauslaufen.

Unterhalb des Nadelhalters 38 ist eine Halterung 50 angeordnet, in welche zur Probenahme ein Probenahmevolumen 44 eingesetzt werden kann. Das Probenahmevolumen 44 ist insbesondere als Flasche 46 ausgebildet, deren Öffnung durch eine Membran 48 verschlossen ist. Die Membran 48 kann mit dem zweiten Ende 40b der Entnahmenadel 40 durchstochen werden, schließt sich jedoch wieder, sobald die Entnahmenadel 40 aus der Membran 48 heraus gezogen wird, um einen Heraustreten von Fluid aus dem Probenahmevolumen 44 zuverlässig zu verhindern. Zur Probenahme wird somit, bevor das Küken 24 in die zweite Endstellung gedreht wird, das Probenahmevolumen 44 in die Halterung 50 eingesetzt und die Entnahmenadel 40 mit ihrem zweiten Ende 40b durch die Membran 48 eingestochen.

Damit die zu entnehmende Probe vollständig aus dem Volumen 36 in das Probenahmevolumen 44 abfließen kann, ist eine Entlüftungsnadel 42 vorgesehen, welche ein erstes Ende 42a und ein zweites Ende 42b aufweist und derart angeordnet ist, dass ihr erstes Ende 42a in dem Volumen 36 liegt, während das zweite Ende 42b aus dem Volumen 36 herausgeführt ist. Insbesondere enden die zweiten Enden 40b, 42b der Entnahmenadel 40 bzw. der Entlüftungsnadel 42 etwa auf gleicher Höhe, während das erste Ende 42a der Entlüftungsnadel 42 weiter in das Volumen 36 hineinragt als das erste Ende 40a der Entnahmenadel 40. Insbesondere schließt das erste Ende 40a der Entnahmenadel 40 im wesentlichen bündig mit der Innenfläche des Nadelhalters 38 ab. Auf diese Weise ist gewährleistet, dass das entnommene Probevolumen vollständig aus dem Volumen 36 über die Entnahmenadel 40 herausfließen kann. Ein vollständiges Herausfließen ist insbesondere bei kleinen Durchtrittsquerschnitten durch die Entnahmenadel 40 jedoch nur dann gewährleistet, wenn gleichzeitig Gas, insbesondere Luft in das Volumen 36 zurückfließen kann. Dazu dient die Entlüftungsnadel 42. Dadurch, dass die Entlüftungsnadel 42 weiter in das Volumen 36 hineinragt als die Entnahmenadel 40, ist gewährleistet, dass die entnommene Probe über die Entnahmenadel 40 und nicht über die Entlüftungsnadel 42 abfließt. Das erste Ende 42a der Entlüftungsnadel 42 ist in einem Winkel von etwa 90° bis 180°, im vorliegenden Beispiel um etwa 90°, abgebogen, um zu verhindern, dass durch den Rohrabschnitt 34 fließendes Fluid direkt in die Entlüftungsnadel 42 gelangen kann.

Um eine drucklose Probenahme zu ermöglichen, ist in keiner der Endstellungen einschließlich sämtlicher Zwischenstellungen eine Verbindung des ersten Anschlussstücks 14 mit dem dritten Anschlussstück 20 oder eine Verbindung des zweiten Anschlussstücks 16 mit dem dritten Anschlussstück 20 gegeben. Zwischen der ersten und der zweiten Endstellung ist somit eine sogenannte positive Überdeckung gegeben, welche insbesondere gewährleistet, dass ein definiertes Probevolumen entnommen wird.

### Bezugszeichenliste

- 10: Probenahmesystem
- 12: Gehäuse
- 14: erstes Anschlussstück
- 16: zweites Anschlussstück
- 18: Verbindungsvolumen
- 20: drittes Anschlussstück
- 22: Verbindungsvolumen
- 24: Küken
- 26: Grundkörper
- 28: Probenahmausnehmung
- 30: Schaft
- 32: Griff
- 34: Rohrabschnitt
- 36: Volumen
- 38: Nadelhalter
- 40: Entnahmenadel
- 40a: erstes Ende
- 40b: zweites Ende
- 42: Entlüftungsnadel
- 42a: erstes Ende
- 42b: zweites Ende
- 44: Probenahmevolumen
- 46: Flasche
- 48: Membran
- 50: Halterung

- l: Längsachse
- v: Verbindungsachse
- a: Längsachse

## Patentansprüche

1. Probenahmesystem (10), welches ein erstes Anschlussstück (14) zum Anschluss an ein fluiddurchströmtes Rohr und ein drittes Anschlussstück (20) aufweist, und mit einem Küken (24), welches einen Grundkörper (26) mit einer Längsachse aufweist (1), um welche das Küken (24) zwischen einer ersten und einer zweiten Endstellung verschwenkbar ist, und mit einer Probenahmeausnehmung (28), wobei in der ersten Endstellung die Probenahmeausnehmung (28) über das erste Anschlussstück (14) mit dem mediendurchströmten Rohr und in der zweiten Endstellung die Probenahmeausnehmung (28) mit dem dritten Anschlussstück (20) verbindbar ist, wobei das dritte Anschlussstück (20) mit einem ersten Ende (40a) einer Entnahmenadel (40), welche mit einem zweiten Ende (40b) durch eine Membran (48) eines Probenahmevolumens (44) stechbar ist, in Verbindung steht, und
in der zweiten Endstellung die Probenahmeausnehmung (28) über das dritte Anschlussstück (20) mit einem ersten Ende (42a) einer Entlüftungsnadel (42) in Verbindung steht, **dadurch gekennzeichnet, dass** sowohl die Entnahmenadel (40) als auch die Entlüftungsnadel (42) mit ihrem jeweiligen ersten Ende (40a, 42a) in einem mit dem dritten Anschlussstück (20) in Verbindung stehenden Volumen (36) liegen.

2. Probenahmesystem nach Anspruch 1,
**dadurch gekennzeichnet, dass** die Entlüftungsnadel (42) weiter in das Volumen (36) hineinragt als die Entnahmenadel (40).

3. Probenahmesystem nach einem der Ansprüche 1 bis 2,
**dadurch gekennzeichnet, dass** das Volumen (36) über einen Rohrabschnitt (34) mit dem dritten Anschlussstück (20) verbunden ist.

4. Probenahmesystem nach einem der Ansprüche 1 bis 3,
**dadurch gekennzeichnet, dass** das Volumen (36) durch ein Rohrstück gebildet ist.

5. Probenahmesystem nach einem der vorhergehenden Ansprüche,
**dadurch gekennzeichnet, dass** das erste Ende (42a) der Entlüftungsnadel (42) um einen Winkel, insbesondere um einen Winkel von etwa 90° bis 180°, abgebogen ist.

6. Probenahmesystem nach einem der vorhergehenden Ansprüche,
**dadurch gekennzeichnet, dass** das Probenahmesystem (10) ein zweites, dem ersten Anschlussstück (14) gegenüberliegendes Anschlussstück (16) aufweist, wobei das dritte Anschlussstück (20) um einen Winkel gegen die Verbindungsachse (v) des ersten (14) und des zweiten Anschlussstücks (16) versetzt angeordnet ist.

7. Probenahmesystem nach Anspruch 6,
**dadurch gekennzeichnet, dass** die Längsachse (1) des Grundkörpers (26) im in das Probenahmesystem (10) eingesetzten Zustand im wesentlichen senkrecht zur Verbindungsachse (v) des ersten (14) und des zweiten Anschlussstücks (16) verläuft.

8. Probenahmesystem nach einem der vorhergehenden Ansprüche,
**dadurch gekennzeichnet, dass** in keiner der Endstellungen einschließlich sämtlicher Zwischenstellungen eine Verbindung des ersten Anschlussstücks (14) mit dem dritten Anschlussstück (20) oder eine Verbindung des zweiten Anschlussstücks (16) mit dem dritten Anschlussstück (20) gegeben ist.

9. Probenahmesystem nach einem der Ansprüche 6 bis 8,
**dadurch gekennzeichnet, dass** die Probenahmeausnehmung (28) als Durchgangsöffnung ausgebildet ist, wobei in der ersten Endstellung über die Durchgangsöffnung das erste Anschlussstück (14) und das zweite Anschlussstück (16) und in der zweiten Endstellung die Durchgangsöffnung mit dem dritten Anschlussstück (20) verbindbar ist.

10. Probenahmesystem nach Anspruch 9,
**dadurch gekennzeichnet, dass** die Durchgangsöffnung im wesentlichen quer zur Längsachse (1) des Kükens (24) verläuft.

## Claims

1. A sampling system (10) which has a first connecting piece (14) for connecting to a pipe traversed by fluid and a third connecting piece (20), and with a cock (24) which has a main body (26) with a longitudinal axis (1) about which the cock (24) is capable of being pivoted between a first and a second end position, and with a sampling recess (28), wherein in the first end position the sampling recess (28) is capable of being connected by way of the first connecting piece (14) to the pipe traversed by media, and in the second end position the sampling recess (28) is capable of being connected to the third connecting piece (20), wherein the third connecting piece (20) is connected to a first end (40a) of an extraction needle (40) which with a second end (40b) is capable of being pierced through a diaphragm (48) of a sampling volume (44), and in the second end position the sampling recess (28) is connected by way of the third connecting piece (20) to a first end (42a) of a ventilation needle (42), **characterized in that** both the extraction needle (40) and the ventilation needle (42) are situated with their respective first end (40a, 42a) in a volume (36) connected to the third connecting piece (20).

2. A sampling system according to claim 1, **characterized in that** the ventilation needle (42) projects further into the volume (36) than the extraction needle (40).

3. A sampling system according to one of claims 1 to 2, **characterized in that** the volume (36) is connected by way of a pipe section (34) to the third connecting piece (20).

4. A sampling system according to any one of claims 1 to 3, **characterized in that** the volume (36) is formed by a pipe member.

5. A sampling system according to any one of the preceding claims, **characterized in that** the first end (42a) of the ventilation needle (42) is bent at an angle, in particular at an angle of approximately 90° to 180°.

6. A sampling system according to any one of the preceding claims, **characterized in that** the sampling system (10) has a second connecting piece (16) opposite the first connecting piece (14), wherein the third connecting piece (20) is arranged offset at an angle to the connecting axis (v) of the first connecting piece (14) and of the second connecting piece (16).

7. A sampling system according to claim 6, **characterized in that** the longitudinal axis (10 of the main body (26) in the state inserted into the sampling system (10) extends substantially at a right angle to the connecting axis (v) of the first connecting piece (14) and of the second connecting piece (16).

8. A sampling system according to any one of the preceding claims, **characterized in that** in none of the end positions including all the intermediate positions is there a connection of the first connecting piece (14) to the third connecting piece (20) or a connection of the second connecting piece (16) to the third connecting piece (20).

9. A sampling system according to any one of claims 6 to 8, **characterized in that** the sampling recess (28) is designed in the form of a through opening, wherein in the first end position the first connecting piece (14) and the second connecting piece (16) are capable of being connected by way of the through opening and in the second end position the through opening is capable of being connected to the third connecting piece (20).

10. A sampling system according to claim 9, **characterized in that** the through opening extends substantially transversely to the longitudinal axis (1) of the cock (24).

## Revendications

1. Système de prélèvement d'échantillon (10) qui comporte une première pièce de liaison (14) destinée à être reliée à un tube de passage d'un fluide et une troisième pièce de liaison (20), et un boisseau (24) qui comporte un corps de base (26) d'un axe longitudinal (1) autour duquel le boisseau (24) peut pivoter entre une première et une seconde position terminale, ainsi qu'un évidement de prélèvement d'échantillon (28), dans lequel, dans la première position terminale, l'évidement de prélèvement d'échantillon (28) peut être relié par l'intermédiaire de la première pièce de liaison (14) avec le tube de passage du fluide, tandis que dans la seconde position terminale, l'évidement de prélèvement d'échantillon (28) peut être relié à la troisième pièce de liaison (20), la troisième pièce de liaison (20) étant reliée avec une première extrémité (40a) d'une aiguille de prélèvement (40) qui peut être enfichée par une seconde extrémité (40b) au travers d'une membrane (48) d'un volume de prélèvement d'échantillon (44), et, dans la seconde position terminale, l'évidement de prélèvement d'échantillon (28) étant relié, par l'intermédiaire de la troisième pièce de liaison (20) avec une première extrémité (42a) d'une aiguille de dégazage (42),
**caractérisé en ce que**
l'aiguille de prélèvement (40) et également l'aiguille de dégazage (42) sont situées par leur première extrémité respective (40a, 42a) dans un volume (36) relié à la troisième pièce de liaison (20).

2. Système de prélèvement d'échantillon conforme à la revendication 1,
**caractérisé en ce que**
l'aiguille de dégazage (42) pénètre plus profondément dans le volume (36) que l'aiguille de prélèvement (40).

3. Système de prélèvement d'échantillon conforme à une des revendications 1 et 2,
**caractérisé en ce que**
le volume (36) est relié à la troisième pièce de liaison (20) par l'intermédiaire d'un tronçon tubulaire (34).

4. Système de prélèvement d'échantillon conforme à l'une des revendications 1 à 3,
**caractérisé en ce que**
le volume (36) est formé par une pièce tubulaire.

5. Système de prélèvement d'échantillon conforme à l'une des revendications précédentes,
**caractérisé en ce que**
la première extrémité (42a) de l'aiguille de dégazage (42) est recourbée d'un angle, en particulier d'un angle d'environ 90° à 180°.

6. Système de prélèvement d'échantillon conforme à l'une des revendications précédentes,
**caractérisé en ce que**
le système de prélèvement d'échantillons (10) comporte une seconde pièce de liaison (16) située à l'opposé de la première pièce de liaison (14), la troisième pièce de liaison (20) étant décalée angulairement par rapport à l'axe de liaison (v) de la première pièce de liaison (14) et de la seconde pièce de liaison (16).

7. Système de prélèvement d'échantillon conforme à la revendication 6,
**caractérisé en ce que**
l'axe longitudinal (1) du corps de base (26) s'étend, à l'état inséré dans le système de prélèvement d'échantillon (10) essentiellement perpendiculairement à l'axe de liaison (v) de la première pièce de liaison (14) et de la seconde pièce de liaison (16).

8. Système de prélèvement d'échantillon conforme à l'une des revendications précédentes,
**caractérisé en ce que**
dans aucune position terminale, y compris toutes les positions intermédiaires, il n'y a une liaison de la première pièce de liaison (14) avec la troisième pièce de liaison (20) ou une liaison de la seconde pièce de liaison (16) avec la troisième pièce de liaison (20).

9. Système de prélèvement d'échantillon conforme à l'une des revendications 6 à 8,
**caractérisé en ce que**
l'évidement de prélèvement d'échantillon (28) est réalisé sous la forme d'une ouverture de passage, dans la première position terminale, la première pièce de liaison (14) et la seconde pièce de liaison (16) peuvent être reliées par l'ouverture de passage, et dans la seconde position terminale l'ouverture de passage peut être reliée avec la troisième pièce de liaison (20).

10. Système de prélèvement d'échantillon conforme à la revendication 9,
**caractérisé en ce que**
l'ouverture de passage s'étend essentiellement transversalement à l'axe longitudinal (1) du boîtier (24).
